(19) **Europäisches Patentamt / European Patent Office / Office européen des brevets**

(11) **EP 4 586 577 A1**

(12) **EUROPEAN PATENT APPLICATION**
published in accordance with Art. 153(4) EPC

(43) Date of publication:
**16.07.2025  Bulletin 2025/29**

(21) Application number: **23878614.9**

(22) Date of filing: **10.05.2023**

(51) International Patent Classification (IPC):
**H04L 43/0852** (2022.01)

(52) Cooperative Patent Classification (CPC):
**H04L 43/0852**

(86) International application number:
**PCT/CN2023/093321**

(87) International publication number:
**WO 2024/082616 (25.04.2024 Gazette 2024/17)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **20.10.2022  CN 202211289349**

(71) Applicant: **ZTE CORPORATION**
**Shenzhen, Guangdong 518057 (CN)**

(72) Inventors:
• **ZHU, Xiangyang**
**Shenzhen, Guangdong 518057 (CN)**
• **YU, Jinghai**
**Shenzhen, Guangdong 518057 (CN)**

(74) Representative: **Ziebig Hengelhaupt Intellectual Property Attorneys Patentanwaltskanzlei PartGmbB Leipziger Straße 49 10117 Berlin (DE)**

(54) **METHOD FOR DETERMINING NODE DELAY, AND STORAGE MEDIUM AND ELECTRONIC DEVICE**

(57)    Provided in the embodiments of the present application are a method for determining a node delay, and a storage medium and an electronic device. The method comprises: determining an intra-period time offset, wherein the intra-period time offset is the time difference between a second moment and a start moment of a target cycle window, which second moment is a moment at which a downstream node receives a first message sent by an upstream node; and according to the offset and the length T of a cycle template, determining a node delay called nodeDelay.

S102

Determine an intra-cycle time offset

S104

Determine a node delay (nodeDelay) according to the time offset and the length T of a cycle template.

Fig. 1a

EP 4 586 577 A1

## Description

### CROSS REFERENCE TO RELATED APPLICATION

This application claims priority to Chinese Patent Application No. 202211289349.2 filed on October 20, 2022, entitled "Method for determining node delay, storage medium and electronic device", the entirety of which is incorporated herein by reference.

### TECHNICAL FIELD

The present application relates to the field of communication technology, and in particular to a method for determining a node delay, and a storage medium and an electronic device.

### BACKGROUND

In some cases, Cycle Specified Queuing and Forwarding (CSQF) and Large-scale Deterministic Internet Protocol Network (LDN) require frequency synchronization, but not time synchronization across the entire network, which can provide deterministic transmission services for key businesses.

A Node delay mainly includes a node processing delay (processDelay), a regulation delay (regulatorDelay) and a queue delay (queueDelay). A processDelay can be measured. A regulatorDelay and a queueDelay are of a packet in an output queue. A packet is not allowed to be scheduled and transmitted within the regulatorDelay time, and a queue to which the packet belongs gets an opportunity of being scheduled within the queueDelay.

A control plane is responsible for planning an end-to-end service path to meet the quality of service (QoS) requirements and constructing a service path calculation topology, however, since a forwarding node uses cycle scheduling for forwarding, a node delay cannot be directly substituted into service path calculation, and no related solution has disclosed how to determine a node delay.

### SUMMARY

Provided in the embodiments of the present application are a method for determining a node delay, and a storage medium and an electronic device, which can accurately determine the time offset within a cycle.

In order to solve the above-mentioned technical problems, the embodiments of the present application are implemented by the following aspects.

In a first aspect, embodiments of the present application provide a method for determining a node delay, including: determining an intra-cycle time offset , wherein the intra-cycle time offset is a time difference between a second moment, and a start moment of a target cycle window, the second moment is a moment at which a downstream node receives a first packet transmitted by an upstream node; and determining, according to the offset and a length T of a cycle template, a node delay called nodeDelay.

In a second aspect, embodiments of the present application provide an electronic device, the electronic device includes a processor, a memory, and a computer-executable instruction that is stored on the memory and is executable on the processor, and the computer-executable instruction, when executed by the processor, implements the method for determining a node delay of the first aspect.

In a third aspect, embodiments of the present application provide a computer-readable storage medium, the computer-readable storage medium is used to store computer-executable instructions, wherein the computer-executable instructions, when executed by the processor, implements the method for determining a node delay of the first aspect.

### BRIEF DESCRIPTION OF DRAWINGS

In order to more clearly illustrate the technical solutions in the embodiments of the present application or in the related art, the drawings required for use in description of the embodiments or the prior art will be briefly introduced below, obviously, the drawings described below are only some embodiments described in the present application, and other drawings may be obtained by those skilled in the art based on these drawings without creative labor.

FIG. 1a illustrates a schematic flow chart of a method for determining a node delay provided in embodiments of the present application.

FIG. 1b is a schematic diagram of a method for determining a node delay in embodiments of the present application.

FIGS. 1c-1d are schematic diagrams of determining a node delay in embodiments of the present application.

FIG. 2 illustrates a schematic flow chart of a method for determining a node delay provided in embodiments of the present application.

FIG. 3a is a schematic diagram of determining a node delay in embodiments of the present application.

FIGS. 3b-3d are schematic diagrams of packet formats.

FIG. 4 illustrates a schematic structural diagram of a device for determining a node delay provided in embodiments of the present application.

FIG. 5 is a schematic diagram of hardware structure of an electronic device.

## DETAILED DESCRIPTION

In order to enable those skilled in the art to better understand the technical solutions in the application, technical solutions in embodiments of the application will be described clearly and thoroughly below with reference to the accompanying drawings in embodiments of the application. Obviously, the embodiments described are part of the embodiments of the application rather than all of the embodiments. All other embodiments obtained by a person skilled in the art without creative work based on embodiments in the application should fall within the scope of the application.

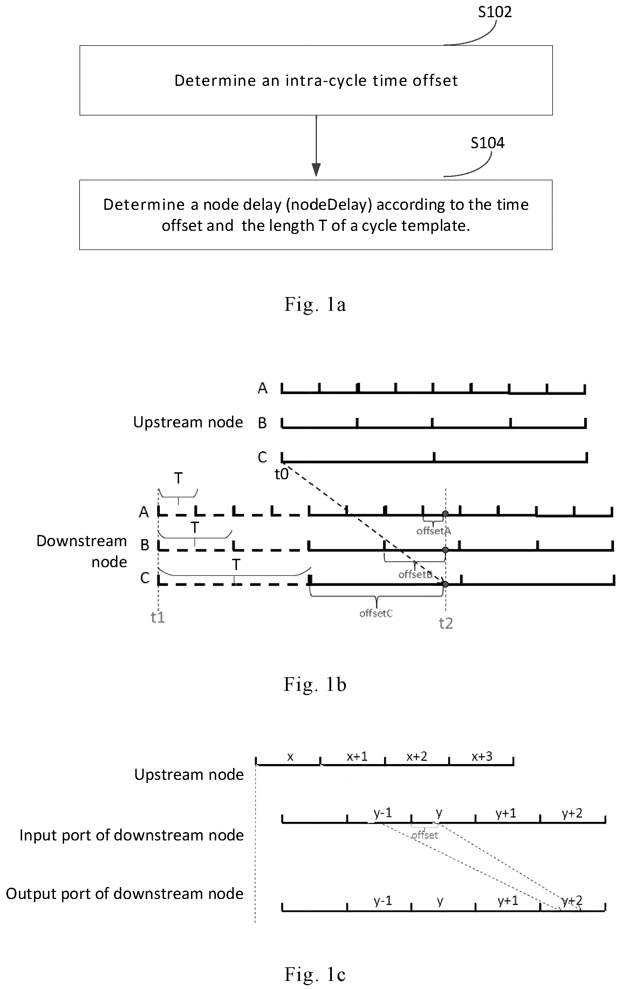

FIG. 1a illustrates a schematic flow chart of a method for determining a node delay provided in embodiments of the present application, the method may be performed by a network node, as shown in the figure, the method may include the following steps.

At S102: an intra-cycle time offset is determined.

The intra-cycle time offset is the time difference between a second moment, and a start moment of a target cycle window, the second moment is a moment at which a downstream node receives a first packet transmitted by an upstream node. Since time of nodes is not synchronized, there is a certain offset between time slots in the same cycle template of upstream and downstream nodes, which is called phase difference $\Delta$, and the offset value is a random value. The offset value is related to a link delay and the phase difference $\Delta$. If the length of a cycle template window is T, the offset value is in the range of [0, T), and the offset value needs to be determined.

FIG. 1b is a schematic diagram of a method for measuring a time offset value in embodiments of the present application. As shown in the figure, in one embodiment, an upstream node transmits a first packet at moment t0, a downstream node receives the first packet transmitted by the upstream node, wherein the first packet indicates the downstream node to measure the time offset value.

A second moment t2 at which the downstream node receives the first packet is determined. A target cycle window, corresponding to the second moment, of the downstream node is determined.

For the downstream node A, the second moment t2 falls within a corresponding target cycle window WA of the downstream node A. For the downstream node B, the second moment t2 falls within a corresponding target cycle window WB of the downstream node B. For the downstream node C, the second moment t2 falls within a corresponding target cycle window WC of the downstream node C.

The time difference between the second moment, and the start moment of the target cycle window is determined as the time offset value within the cycle, such as offsetA, offsetB, and offsetC as shown in the figure.

At S104: a node delay (nodeDelay) is determined according to the time offset and the length T of a cycle template.

Therefore, the nodeDelay can be determined by the method for determining a node delay provided in the embodiments of the present application.

In embodiments of the present application, by determining an intra-cycle time offset, wherein the intra-cycle time offset is the time difference between the second moment, and the start moment of a target cycle window, and the second moment is the moment at which the downstream node receives a first packet transmitted by the upstream node; and determining the node delay (nodeDelay) according to the time offset and the length T of a cycle template, the node delay can be accurately determined.

In one possible implementation, the step S 102 may include that a time offset value is determined according to a first moment, the second moment and the length of the cycle template, wherein the first moment is a start moment of the downstream node or a start moment of the target cycle window.

In one possible implementation, the time offset value is determined according to the following equation,

$$\text{offset} = \text{MOD}\,((t2\text{-}t1),\, T).$$

Where offset is the time offset value, t1 is the first moment, T is the length of the cycle template, and MOD is used to return a remainder after dividing (t2-t1) by T.

As shown in the figure, the remainder after dividing (t2-t1) by T is the offset value. For example, one cycle of the downstream node C includes 2 cycle templates T, the quotient of dividing (t2-t1) by T in the downstream node C is 1, that is, (t2-t1) shown in the figure contains one T, and offsetC is the remainder. For another example, one cycle of the downstream node B includes 6 cycle templates T, the quotient of dividing (t2-t1) by T in the downstream node B is 3, that is, (t2-t1) shown in the figure contains three T, and offsetB is the remainder.

Therefore, in the embodiments of the present application the time offset value within a cycle, and further the node delay, can be accurately determined.

In one possible implementation, in step S104, a regulation delay (regulatorDelay) may be determined according to the following equation (1);

$$regulatorDelay = \lceil processDelay/T \rceil * T; \qquad (1)$$

Where processDelay is a processing delay. The processDelay is relatively fixed, and may be a predetermined value with upper and lower limits theoretically. The processDelay may also be obtained by measurement. The symbol "⌈ ⌉" indicates rounding up to an integer.

The node delay (nodeDelay) is determined according to the regulatorDelay and the length T of a cycle.

FIG. 1c is a schematic diagram of determining a node delay in embodiments of the present application. As shown in the figure, a packet receiving window is y, and assuming that the upper limit of processDelay is 0.5T, then according to equation (1), the regulatorDelay value is calculated to be T.

After notification of regulatorDelay adjustment, a time slot scheduling window is started, and queueDelay, which is T, is the time when the scheduling window is started.

The time offset, falling within the window, of a measurement packet P2 is represented as offset, the offset value needs to be deducted, that is, the equation for determining a node delay should be equation (2):

$$nodeDelayA = regulatorDelay + queueDelay + (T - offset) \qquad (2)$$

Based on equations (1) and (2), equation (3) is obtained:

$$nodeDelayA = \lceil processDelay/T \rceil * T + queueDelay + (T - offset) \qquad (3)$$

Therefore, the nodeDelay may be determined according to the regulatorDelay and the queueDelay, wherein the processDelay is a processing delay.

In one implementation, the queueDelay may be T, and equation (4) is thus obtained, the nodeDelay may be determined according to the regulatorDelay and the length T of the cycle.

$$nodeDelayA = \lceil processDelay/T \rceil * T + 2T - offset \qquad (4)$$

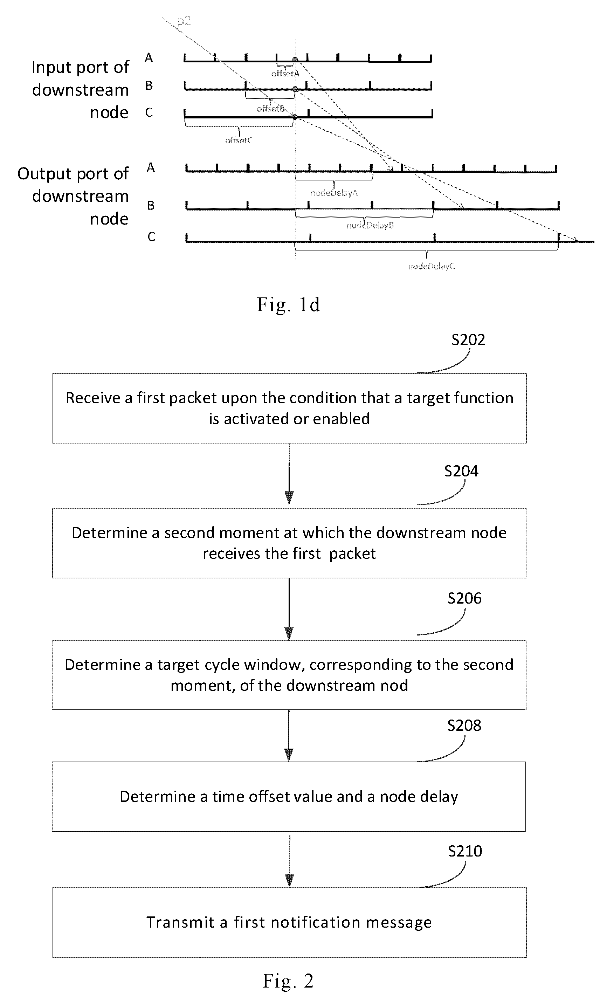

If the upstream and downstream nodes support a plurality of cycle templates at the same time, the offset value corresponding to each cycle template may be measured, and the corresponding nodeDelay may also be calculated. For example, if the upstream and downstream nodes support three cycle templates A, B, and C at the same time, the offset values may be different, and denoted as offsetA, offsetB, and offsetC. Further, according to equation (4), the corresponding cycle scheduling delays nodeDelayA, nodeDelayB, and nodeDelayC may be calculated, as shown in FIG. 1d.

Therefore, according to the embodiments of the present application, the processDelay can be absorbed to certain extent by means of the regulatorDelay, which eliminates jittering caused by the processing, and accurately determine the node delay.

FIG. 2 illustrates a schematic flow chart of a method for determining a node delay provided in embodiments of the present application, the method may be performed by a network node, as shown in the figure, the method may include the following steps.

At S202: Upon the condition that a target function is activated or enabled, a first packet is received.

In one implementation, where a time offset value measurement function of a network node is activated, the first packet constructed and transmitted by an upstream node is received, wherein the time offset value measurement function of the network node is activated includes that the upstream node is allowed to transmit the first packet according to a predetermined rule, and the predetermined rule includes at least one of the moment of transmitting, the frequency of transmitting or the number of transmitting. The moment of transmitting may be a start moment of a cycle window or an end moment of a cycle window.

In one implementation, in order to measure offset values of a plurality of cycle templates by a single first packet, the moment at which an upstream node transmits a first packet may be at the start or end moment of all cycle template windows, so the first packet needs to be transmitted at the start or end moment of the maximal cycle template window. As shown in FIG. 1b, the template C is the maximal window template, so a first packet may be transmitted at a start moment of the window of the template C, and different offset values of the templates A, B and C are measured in the downstream node, and denoted as offsetA, offsetB, and offsetC respectively, and the three values may be equal or unequal.

The first packet may adopt a variety of protocol types, which is not limited herein. In one implementation, where a time offset value measurement function of a network node is enabled, a first packet transmitted by an upstream node is received.

A first field in the first packet may indicate the downstream node to measure the time offset value. The first field may be an existing field in the first packet or a newly added field.

In this step, measurement of the offset value upon the condition that the target function is activated or enabled.

At S204: a second moment at which the downstream node receives the first packet is determined.

The first packet is transmitted at a target moment of a first cycle window of the upstream node. The target moment of the first cycle window may include a start moment or an end moment of the first cycle window.

At S206: a target cycle window, corresponding to the second moment, of the downstream node is determined.

At S208: a time offset value and a node delay are determined.

This step is the same as the corresponding step in the embodiment of FIG. 1 and will not be described in detail herein.

At S210: a first notification message is transmitted.

The above steps may be performed within a controller, and in this case, the offset and processDelay values corresponding to each template need to be measured and reported. The above calculation process may optionally be performed in the downstream node, and when a node delay is calculated by a downstream node, the delay values may be stored in a local node, and at least an address and interface that can identify a local network device, an address and interface that can identify an opposite-end network device, the length of a cycle template window, a node processing delay, a window-offset and a determined node delay value are stored.

In this step, a network device may notify a controller of the value by means of a first notification message, so that the controller may obtain the information and perform accurate path planning, traffic scheduling, etc., based on the information and other required information. If the node supports a plurality of cycle templates, then optionally, the cycle templates and corresponding nodeDelay value information may be notified in one message. The way of information notification is not limited herein, for example, the information may be reported to the controller by a plurality of extension interfaces.

In one implementation, the correspondence between the cycle template and the nodeDelay may be recorded. The first notification message includes the correspondence between the cycle template and the nodeDelay.

In addition, after the offset value is measured, the network device may notify other nodes in the network or the controller of the offset value by transmitting a second notification message, so that components such as a path calculation unit or the controller may obtain the offset value and perform accurate path planning, traffic scheduling, etc., based on the offset value and other required information.

The second notification message includes identification information of the downstream node as well as the correspondence between the time offset value and the target cycle window. The identification information of the downstream node may include an address, an interface, etc., that can identify a downstream node device. The second notification message may further include identification information, such as an address, an interface, etc., that can identify the network device at the receiving end of the second notification message. The second notification message may further include information such as the length of a cycle template window.

If the network device supports multi-cycle scheduling, then optionally, multiple cycle templates and corresponding offset value information may be notified by transmitting multiple notification messages respectively or one notification message. The way of information notification is not limited in this embodiment, for example, information may be notified to other nodes in the network by extended Interior Gateway Protocols (IGP), Open Shortest Path First (OSPF), Intermediate System-to-Intermediate System (ISIS),and Border Gateway Protocol (BGP); information may also be reported to the controller by extending southbound interface, such as the Network Configuration Protocol (NETCONF), Border Gateway Path Computation Element Protocol (BGPCEP), Border Gateway Protocol Link-state (BGP-LS), etc.

In one implementation, the time offset value may also be recorded; and/or the correspondence among the identification information of the downstream node, the time offset value, and the target cycle window may be recorded.

The following examples illustrate the embodiments of the present application.

Example 1

Assuming that there are two network devices N1 and N2, the frequency of the two devices is synchronized but the time thereof is not synchronized, in the service direction N1 to N2, N1 is an upstream device node and N2 is a downstream device node. Each of the N1 and N2 devices supports three cycle templates, that is, A, B, and C, and the time slot length of these cycle templates are cycleLengthA = 10 us, cycleLengthB = 20 us, and cycleLengthC = 40 us, respectively.

A start moment of a window of the downstream node is t1 = 10000 us, and it is assumed that the moment when a measurement packet, which is transmitted by the upstream node at an window end moment of the cycle template C, reaches the downstream node is t2 = 50015 us, then, at step S102, the intra-cycle offsets corresponding to the three templates may be calculated as follows:

$$offsetA = MOD\ ((t2\text{-}t1),\ cycleLengthA) = MOD\ (50015\text{-}10000,\ 10) = 5\ us;$$

$$offsetB = MOD\ ((t2\text{-}t1),\ cycleLengthB) = MOD\ (50015\text{-}10000,\ 20) = 15\ us;$$

$$offsetC = MOD\ ((t2\text{-}t1),\ cycleLengthC) = MOD\ (50015\text{-}10000,\ 40) = 15\ us,$$

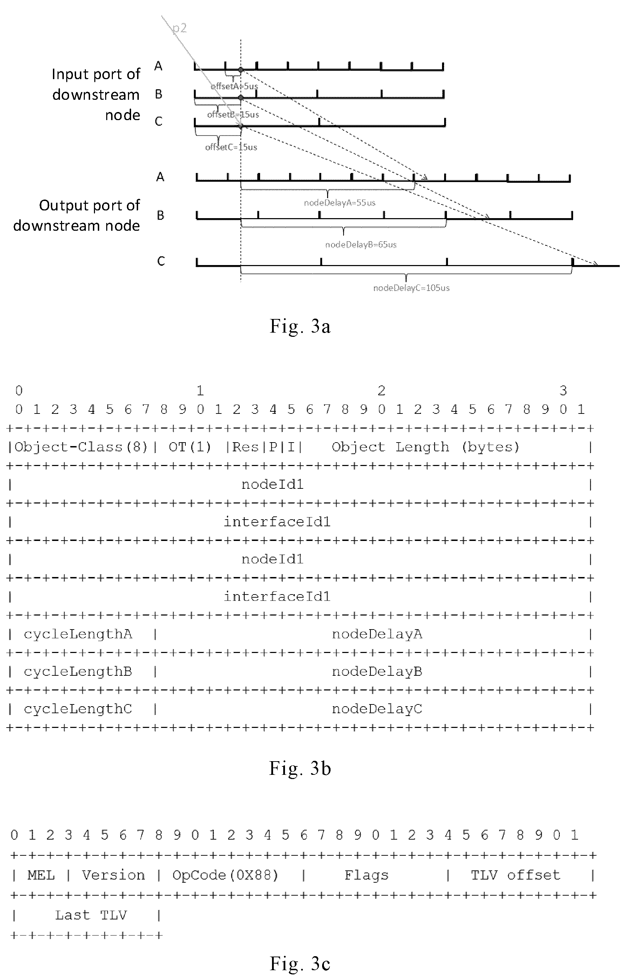

as shown in FIG. 3a.

Assuming that a lower limit of a node processing delay (processDelay) is 15 us, and an upper limit thereof is 35 us.

The process of determining the node delay may be performed in a controller. At step S210, the processDelay and offsetA, offsetB and offSet are reported to the controller. The node delay may also be determined in the downstream node N2. At S104, for the cycle template A, the node delay is determined according to the following equation:

$$nodedelayA = \lceil 35/10 \rceil * 10 + 20 - offsetA = 55\ us$$

Similarly, for cycle templates B and C:

$$nodedelayB = \lceil 35/20 \rceil * 20 + 40 - 15 = 65\ us$$

$$nodedelayC = \lceil 35/40 \rceil * 40 + 80 - 15 = 105\ us$$

The following table is an example of nodeDelay values corresponding to different cycle templates recorded locally at the node N2:

Table 1

| Local device information | | Opposite-end device information | | Cycle template (us) | Determined node delay value (us) |
|---|---|---|---|---|---|
| Node ID | Interface | Node ID | Interface | | |
| nodeB | Interface 1 | nodeA | Interface2 | 10 | 55 |
| | | | | 20 | 65 |
| | | | | 40 | 105 |
| ...... | ...... | ...... | ...... | ...... | ...... |

Example 2

This embodiment provides an example of encapsulation of a nodeDelay value reporting packet when the node delay is determined by a downstream node. Assuming that there are three templates A, B, and C, in this embodiment, the information corresponding to nodeDelay values of three templates is carried in one notification message. Taking the Path Computation Element Protocol (PCEP) as an example, the Object-class field and the OT field are reserved to provide a convenient extension method for the PCEP protocol, which is used to indicate a new message type.

In this embodiment, the object-class field and the OT field may be flexibly allocated to indicate that the message content includes the cycle templates and corresponding node delay determination values, the encapsulation format is shown in FIG. 3b, wherein the meaning of each field is illustrated as following.

An upstream node ID, a nodeId1 field occupies 4 bytes; and an upstream node output port ID, an inferfaceId1 field occupies 4 bytes.

A downstream node ID, a nodeId2 field occupies 4 bytes; and a downstream node input port ID, an inferfaceId2 occupies 4 bytes;

Each of the lengths of cycle templates, namely cycleLengthA, cycleLengthB and cycleLengthC, occupies 1 byte; and each of the corresponding node delay determination values nodeDelayA, nodeDelayB and nodeDelayC occupies 3 bytes.

It should be noted that the extension method and value of the PCEP protocol packets in this embodiment are only examplary, in addition, the node delay determination value information can also be reported based on extension of other protocols , and the present application is not limited by the content of the embodiments.

Example 3

Assuming that there are two network devices N1 and N2, the frequency of the two devices is synchronized but the time thereof is not synchronized, in the service direction N1 to N2, N1 is an upstream device node and N2 is a downstream device node. Assuming that the start moment of a local window of the N2 node device is determined to be 150000 ns in nanoseconds, and each of the N1 and N2 devices supports three cycle templates, i.e., cycle templates A, B, and C, and the time slot lengths of these cycle templates are 10000 ns, 20000 ns, and 40000 ns, respectively, the steps to measure the offset value are as following.

At S202, the offset value measurement function is enabled, and the N1 device is activated to transmit the first packet, with the frequency of transmitting being 40 us and the number of transmitting being 3. The N1 node constructs the first packet, and the first packet indicates to perform offset value measurement. The N1 node transmits the first packet at the start (or end) moment of the template C window at an interval of 40 us, and 3 first packets are transmitted in total.

At S204, the N2 node records the receiving time of the three first packets, in the unit of nanoseconds, as 865000 us, 905010 ns and 945005 ns respectively. When N2 receives each first packet, in S206-S208, the offset values corresponding to the three cycle templates A, B and C are calculated respectively. For example, with respect to the initial first packet, for the template A, offsetA = MOD (855000 - 150000, 10000) = 5000 ns, for the template B, offsetB = MOD (865000 - 150000, 20000) = 7500 ns, and for the template C, offsetC = MOD (865000 - 150000, 40000) = 8750 ns. With respect to the subsequent two first packets, the calculation method thereof is the same with that of the initial first packet. The node N2 calculates an average value of the three measurement results, which results in offsetA = 5005 ns, offsetB = 7505 ns, and offsetC = 8755 ns, and the calculation results are recorded locally.

The following table is an example of offset values, corresponding to different cycle templates, recorded at the node N2 locally:

Table 2

| Local device information | | Opposite-end device information | | Cycle template (us) | Offset value (ns) |
|---|---|---|---|---|---|
| Node ID | Interface | Node ID | Interface | | |
| nodeB | Interface1 | nodeA | Interface2 | 10 | 5005 |
| | | | | 20 | 7505 |
| | | | | 40 | 8755 |
| ...... | ...... | ...... | ...... | ...... | ...... |

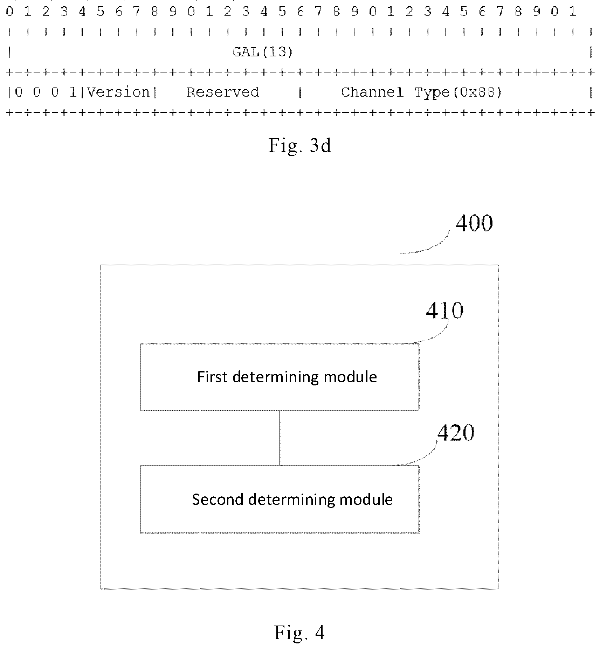

This embodiment provides an example of an encapsulation format of the first packet. For different network encapsulation and protocols, a variety of first packet carrying manners may be defined. If the network is Ethernet, based on the Operation Administration and Maintenance (OAM) packet encapsulation format of Y.1731, a new value 0x88 may be allocated in the OpCode field to indicate that the OAM packet is used to measure the offset value, and the data field of the OAM packet is null and does not carry other values, as shown in FIG. 3c. In a Multi-Protocol Label Switching (MPLS) network, based on the OAM first packet extension of the G-Ach header, for example, a new ChannelType value 0xt88 may be defined to indicate that the carried packet is used to measure the offset value, as shown in FIG. 3d.

In an IP network, the destination User Datagram Protocol/Transmission Control Protocol (UDP/TCP) port number of an OAM packet is usually used to indicate the type of the OAM packet, similarly, a UDP/TCP port 8888 may be allocated to indicate the offset value first packet.

The offset value first packet extension method using other network encapsulation and OAM protocols as carriers is similar and will not be enumerated here.

At S210, a second notification message is transmitted.

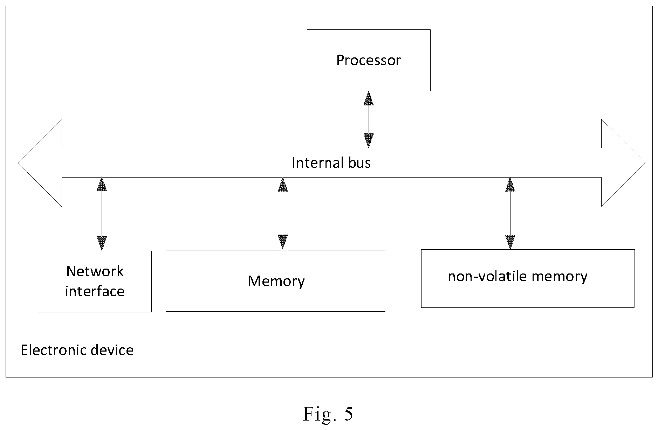

The encapsulation message example of the second notification message includes: assuming that there are three templates, information of the offset values corresponding to the three templates is carried in one notification message. For example, the ISIS protocol may be extended to add a link attribute sub-TLV (called offset-measurement-sub-TLV) to carry the measured value information of the offset between the upstream and downstream devices connected by the link, the schematic encapsulation format is shown in FIG. 5.

The field type uses a specific value to represent that sub-TLV is the type of an offset measured value, the field length represents the total length of a data portion of the sub-TLV in the unit of bytes, the value of the field length is 12; each of the fields cycle-A-length, cycle-B-length, and cycle-C-length occupies 8 bits and is used to represent the length of the cycle in the unit of microseconds, for example, 10 represents that the cycle is 10 us, 20 represents that the cycle is 20 us, and 40 represents that the cycle is 40 us. The fields offsetA, offsetB, and offsetC represent the offset values measured for the three templates in nanoseconds (ns) respectively, and each occupy 3 bytes.

It should be noted that the offset value measurement process and packet encapsulation format listed in the above embodiments are only for illustration and are not intended to limit the present invention.

FIG. 4 illustrates a schematic structural diagram of a device for determining a node delay provided in embodiments of the present application, the device 400 includes a first determining module 410 and a second determining module 420.

The first determining module 410 is used to determine an intra-cycle time offset, wherein the intra-cycle time offset is the time difference between a second moment, and a start moment of a target cycle window, and the second moment is a moment at which a downstream node receives a first packet transmitted by an upstream node; and the second determining module 420 is used to determine a node delay (nodeDelay) according to the offset and the length T of a cycle template.

In one possible implementation, the first determining module 410 is used to determine the time offset value according to a first moment, the second moment and the length of the cycle template, wherein the first moment is a start moment of the downstream node or a start moment of the target cycle window.

In one possible implementation, the first determining module 410 is used to determine the time offset value according to the following equation; offset = MOD ((t2 - t1), T).

wherein offset is the time offset value, t1 is the first moment, T is a length of the cycle template, and MOD is used to return a remainder after dividing (t2-t1) by T.

In one implementation, the second determining module 420 is used to determine the nodeDelay according to the following equation; $nodeDelay = \lceil processDelay/T \rceil * T + 2T - offset$; wherein the processDelay is a processing delay.

In one implementation, the second determining module 420 is used to determine a regulation delay (regulatorDelay) according to the following equation: $nodeDelay = \lceil processDelay/T \rceil * T$; wherein processDelay is a processing delay; and determine a node delay (nodeDelay) according to the regulatorDelay and the length T of the cycle template.

In one implementation, the second determining module 420 is used to determine a regulation delay (regulatorDelay) according to the following equation: regulatorDelay $= \lceil processDelay/T \rceil * T$; and determine the node delay (nodeDelay) according to the regulatorDelay and a queue delay (queueDelay), wherein the queueDelay is the T.

In one implementation, the processing delay (processDelay) is determined according to an upper limit or a lower limit.

In one implementation, the second determining module 420 is used to record the correspondence between the cycle template and the nodeDelay after determining the node delay (nodeDelay).

In one implementation, the second determining module 420 is used to transmit a first notification message after determining the node delay (nodeDelay), wherein the first notification message includes correspondence between the cycle template and the nodeDelay.

The device 400 provided in the embodiment of the present application may perform the various methods described in the foregoing method embodiments, and achieve the functions and beneficial effects of the various methods described in the foregoing method embodiments, which will not be repeated here.

FIG. 5 shows a schematic diagram of the hardware structure of an electronic device that implements the embodiments of the present application, referring to the figure, at the hardware level, the electronic device includes a processor, and optionally, an internal bus, a network interface, and a memory. The memory may include an internal memory, for example a high-speed random access memory (RAM), and may also include a non-volatile memory (nonvolatile memory), such as at least one disk storage, etc. Of course, the electronic device may also include hardware required for other services.

The processor, network interface and memory may be interconnected by an internal bus, which may be an Industry Standard Architecture (ISA) bus, a Peripheral Component Interconnect (PCI) bus or an Extended Industry Standard Architecture (EISA) bus, etc. The bus may be divided into an address bus, a data bus, a control bus, etc. For ease of representation, only one bidirectional arrow is used in the figure, but it does not mean that there is only one bus or one type of bus.

The memory is used to store the program. Specifically, the program may include program codes, and the program codes include computer operation instructions. The memory may include an internal memory and a non-volatile memory, and provides instructions and data to the processor.

The processor reads corresponding computer program from the non-volatile memory into the memory and then runs it, forming a device for locating the target user at the logical level. The processor executes the program stored in the memory and is specifically used to execute the method for determining a node delay described in the embodiment of FIG. 1a or FIG. 2.

The method disclosed in the embodiment shown in FIG. 1a or FIG. 2 of the present application may be applied to a processor or implemented by a processor. The processor may be an integrated circuit chip with signal processing capabilities. In the implementation process, each step of the above method may be completed by an integrated logic circuit in the form of hardware in the processor or an instruction in the form of software. The above processor may be a general-purpose processor, including a central processing unit (CPU), a network processor (NP), etc.; it may also be a digital signal processor (DSP), an application-specific integrated circuit (ASIC), a field-programmable gate array (FPGA) or other programmable logic devices, discrete gates or transistor logic devices, discrete hardware components. The methods, steps and logic block diagrams disclosed in the embodiments of the present application may be implemented or executed. A general-purpose processor may be a microprocessor or the processor may also be any conventional processor, etc. The steps of the method disclosed in the embodiments of the present application may be directly embodied as a hardware decoding processor for execution, or may be implemented by a combination of hardware and software modules in the decoding processor. The software module may be located in a storage medium well-known in the art, such as a random access memory, a flash memory, a read-only memory, a programmable read-only memory, or an electrically erasable programmable memory, a register, etc. The storage medium is located in the memory, and the processor reads information in the memory and completes the steps of the above method in combination with its hardware.

The electronic device may also perform the various methods described in the foregoing method embodiments, and achieve the functions and beneficial effects of the various methods described in the foregoing method embodiments, which will not be repeated here.

In addition to software implementation methods, the electronic device of the present application does not exclude other implementation methods, such as logic devices or a combination of software and hardware, etc., that is, the execution subject of the following processing flow is not limited to each logic unit, but may also be hardware or logic devices.

Embodiments of the present application further propose a computer-readable storage medium, which stores one or more programs, when the one or more programs are executed by an electronic device including a plurality of applications, the electronic device implements the method for determining a node delay described in the embodiment of FIG. 1a or FIG. 2.

The computer-readable storage medium includes read-only memory (ROM), random access memory (RAM), magnetic disk or optical disk.

Furthermore, embodiments of the present application further provide a computer program product, the computer program product includes a computer program stored on a non-transitory computer-readable storage medium, the computer program includes program instructions, the program instructions, when executed by a computer, implements the method for determining a node delay shown in FIG. 1a, or FIG. 2.

In summary, the above descriptions are merely preferred embodiments of the present application and are not intended to limit the protection scope of the present application. Any modification, equivalent replacement, improvement, etc., that is made within the spirit and principle of the present application should be included within the protection scope of the present application.

The system, device, module or unit described in the above embodiments may be specifically implemented by a computer chip or entity, or a product with certain functions. A typical implementation device is a computer. Specifically, the computer may be, for example, a personal computer, a laptop computer, a cellular phone, a camera phone, a smart phone, a personal digital assistant, a media player, a navigation device, an email device, a game console, a tablet computer, a wearable device, or a combination of any of these devices.

Computer readable media include permanent and non-permanent, removable and non-removable media that may be used to store information by any method or technology. Information may be computer-readable instructions, data structures, program modules or other data. Examples of computer storage media include, but are not limited to, Parallel Random Access Machine (PRAM), Static Random-Access Memory (SRAM), Dynamic Random Access Memory (DRAM), other types of random access memory (RAM), Read-Only Memory (ROM), Electrically Erasable Programmable Read Only Memory (EEPROM), Flash memory or other memory technology, Compact Disc Read-Only Memory (CD-ROM), Digital Video Disc (DVD) or other optical storage, magnetic cassettes, magnetic tape magnetic disk storage or other magnetic storage devices or any other non-transmission media that may be used to store information that is accessible to a computing device. According to the definition in this document, computer-readable media do not include temporary computer-readable media (transitory media), such as modulated data signals and carrier waves.

It should be noted that, the terms "include", "comprise" or any other variations thereof are intended to cover a non-exclusive inclusion, such that a process, method, article, or device that comprises a series of elements not only comprises those elements, but also comprises other elements that are not explicitly listed, or further comprises elements that are inherent to the process, method, article, or device. Without further limitations, an element limited by "comprising a..." does not exclude the presence of other identical elements in the process, method, article, or device that includes the element.

Each embodiment in this description is described in a progressive manner, and the same or similar parts between the embodiments may be referred to each other, and each embodiment focuses on the differences from other embodiments. In particular, for the system embodiment, since it is basically similar to the method embodiment, the description is relatively simple, and the relevant parts may be referred to the partial description of the method embodiment.

## Claims

1.  A method for determining a node delay, wherein the method comprises:

    determining an intra-cycle time offset, wherein the intra-cycle time offset is a time difference between a second moment, and a start moment of a target cycle window, and the second moment is a moment at which a downstream node receives a first packet transmitted by an upstream node; and
    determining, according to the offset and a length T of a cycle template, a node delay called nodeDelay.

2.  The method according to claim 1, wherein determining the intra-cycle time offset comprises:
    determining, according to a first moment, the second moment, and the length of the cycle template, a time offset value, wherein the first moment is a start moment of the downstream node or a start moment of the target cycle window.

3.  The method according to claim 2, wherein determining, according to the first moment, the second moment, and the length of the cycle template, the time offset value comprises:

    determining the time offset value according to the following equation;

    $$\text{offset} = \text{MOD}\,((t2\text{-}t1),\ T);$$

    wherein offset is the time offset value, t1 is the first moment, T is the length of the cycle template, and MOD is used to return a remainder after dividing (t2-t1) by T.

4.  The method according to claim 1, wherein determining, according to the offset and the length T of the cycle template, the nodeDelay comprises:

    determining the nodeDelay according to the following equation;

    $$nodeDelay = \lceil processDelay/T \rceil * T + 2T - offset;$$

    ;
    wherein processDelay is a processing delay.

5.  The method according to claim 1, wherein determining, according to the offset and the length T of the cycle template, the nodeDelay comprises:

    determining a regulation delay called regulatorDelay according to the following equation;

    $$regulatorDelay = \lceil processDelay/T \rceil * T;$$ wherein processDelay is a processing delay; and
    determining, according to the regulatorDelay and the length T of the cycle template, the nodeDelay.

6. The method according to claim 1, wherein determining, according to the offset and the length T of the cycle template, the nodeDelay comprises:

determining a regulation delay called regulatorDelay according to the following equation;

$$regulatorDelay = \lceil processDelay/T \rceil * T,$$

and
determining, according to the regulatorDelay and a queue delay called queueDelay, the nodeDelay, wherein processDelay is a processing delay, and the queueDelay is T.

7. The method according to claim 1, wherein after determining the nodeDelay, the method further comprises: recording a correspondence between the cycle template and the nodeDelay.

8. The method according to claim 1, wherein after determining the nodeDelay, the method further comprises: transmitting a first notification message, wherein the first notification message comprises a correspondence between the cycle template and the nodeDelay.

9. An electronic device, comprising:

a processor; and
a memory arranged to store computer-executable instructions, wherein the computer-executable instructions, when executed by the processor, perform the method for determining a node delay according to any one of claims 1-8.

10. A computer-readable medium storing one or more programs, wherein the one or more programs, when executed by an electronic device comprising a plurality of application programs, enable the electronic device to perform the method for determining a node delay according to any one of claims 1-8.

S102

Determine an intra-cycle time offset

S104

Determine a node delay (nodeDelay) according to the time offset and the length T of a cycle template.

Fig. 1a

A

Upstream node   B

C

t0

T

A

Downstream   B
node
C

offsetA

offsetB

offsetC

t1                                                    t2

Fig. 1b

|   x   |  x+1  |  x+2  |  x+3  |
Upstream node

y-1     y     y+1    y+2
Input port of downstream node

offset

Output port of downstream node            y-1     y     y+1    y+2

Fig. 1c

Input port of
downstream
node

A

B

C

offsetA

offsetB

offsetC

p2

Output port of
downstream
node

A

B

C

nodeDelayA

nodeDelayB

nodeDelayC

Fig. 1d

S202

Receive a first packet upon the condition that a target function
is activated or enabled

S204

Determine a second moment at which the downstream node
receives the first  packet

S206

Determine a target cycle window, corresponding to the second
moment, of the downstream nod

S208

Determine a time offset value and a node delay

S210

Transmit a first notification message

Fig. 2

Input port of downstream node

A

B

C

offsetA=5us

offsetB=15us

offsetC=15us

Output port of downstream node

A

B

C

nodeDelayA=55us

nodeDelayB=65us

nodeDelayC=105us

Fig. 3a

```
 0                   1                   2                   3
 0 1 2 3 4 5 6 7 8 9 0 1 2 3 4 5 6 7 8 9 0 1 2 3 4 5 6 7 8 9 0 1
+-+-+-+-+-+-+-+-+-+-+-+-+-+-+-+-+-+-+-+-+-+-+-+-+-+-+-+-+-+-+-+-+
|Object-Class(8)| OT(1) |Res|P|I|   Object Length (bytes)      |
+-+-+-+-+-+-+-+-+-+-+-+-+-+-+-+-+-+-+-+-+-+-+-+-+-+-+-+-+-+-+-+-+
|                           nodeId1                             |
+-+-+-+-+-+-+-+-+-+-+-+-+-+-+-+-+-+-+-+-+-+-+-+-+-+-+-+-+-+-+-+-+
|                         interfaceId1                          |
+-+-+-+-+-+-+-+-+-+-+-+-+-+-+-+-+-+-+-+-+-+-+-+-+-+-+-+-+-+-+-+-+
|                           nodeId1                             |
+-+-+-+-+-+-+-+-+-+-+-+-+-+-+-+-+-+-+-+-+-+-+-+-+-+-+-+-+-+-+-+-+
|                         interfaceId1                          |
+-+-+-+-+-+-+-+-+-+-+-+-+-+-+-+-+-+-+-+-+-+-+-+-+-+-+-+-+-+-+-+-+
| cycleLengthA  |                nodeDelayA                     |
+-+-+-+-+-+-+-+-+-+-+-+-+-+-+-+-+-+-+-+-+-+-+-+-+-+-+-+-+-+-+-+-+
| cycleLengthB  |                nodeDelayB                     |
+-+-+-+-+-+-+-+-+-+-+-+-+-+-+-+-+-+-+-+-+-+-+-+-+-+-+-+-+-+-+-+-+
| cycleLengthC  |                nodeDelayC                     |
+-+-+-+-+-+-+-+-+-+-+-+-+-+-+-+-+-+-+-+-+-+-+-+-+-+-+-+-+-+-+-+-+
```

Fig. 3b

```
 0 1 2 3 4 5 6 7 8 9 0 1 2 3 4 5 6 7 8 9 0 1 2 3 4 5 6 7 8 9 0 1
+-+-+-+-+-+-+-+-+-+-+-+-+-+-+-+-+-+-+-+-+-+-+-+-+-+-+-+-+-+-+-+-+
| MEL | Version | OpCode(0X88)  |    Flags      |  TLV offset   |
+-+-+-+-+-+-+-+-+-+-+-+-+-+-+-+-+-+-+-+-+-+-+-+-+-+-+-+-+-+-+-+-+
|    Last TLV   |
+-+-+-+-+-+-+-+-+
```

Fig. 3c

```
 0 1 2 3 4 5 6 7 8 9 0 1 2 3 4 5 6 7 8 9 0 1 2 3 4 5 6 7 8 9 0 1
+-+-+-+-+-+-+-+-+-+-+-+-+-+-+-+-+-+-+-+-+-+-+-+-+-+-+-+-+-+-+-+-+
|                           GAL(13)                             |
+-+-+-+-+-+-+-+-+-+-+-+-+-+-+-+-+-+-+-+-+-+-+-+-+-+-+-+-+-+-+-+-+
|0 0 0 1|Version|    Reserved    |    Channel Type(0x88)        |
+-+-+-+-+-+-+-+-+-+-+-+-+-+-+-+-+-+-+-+-+-+-+-+-+-+-+-+-+-+-+-+-+
```

Fig. 3d

400

First determining module — 410

Second determining module — 420

Fig. 4

Fig. 5

## INTERNATIONAL SEARCH REPORT

| International application No. |
|---|
| **PCT/CN2023/093321** |

| **A.** | **CLASSIFICATION OF SUBJECT MATTER** |
|---|---|

H04L 43/0852(2022.01)i

According to International Patent Classification (IPC) or to both national classification and IPC

| **B.** | **FIELDS SEARCHED** |
|---|---|

Minimum documentation searched (classification system followed by classification symbols)

IPC: H04LH04W

Documentation searched other than minimum documentation to the extent that such documents are included in the fields searched

Electronic data base consulted during the international search (name of data base and, where practicable, search terms used)

3GPP, CJFD, CNTXT, DWPI, ENTXT, ENTXTC, IETF, VEN, WPABS, WPABSC: 差, 窗口, 计算, 接收, 开始, 模板, 偏移, 确定性, 确定性网络, 时间, 时间差, 时延, 下游, 延迟, 延时, 周期, 周期模板, 字段, cycle, delay, detnet, node, nodedelay, offset, PCEP, period, process, processdelay, profile, regulator, regulatordelay, window, +delay

| **C.** | **DOCUMENTS CONSIDERED TO BE RELEVANT** |
|---|---|

| Category* | Citation of document, with indication, where appropriate, of the relevant passages | Relevant to claim No. |
|---|---|---|
| A | N. Finn et al. "DetNet Bounded Latency draft-ietf-detnet-bounded-latency-00" *IETF*, 24 July 2019 (2019-07-24), sections 3-6 | 1-10 |
| A | CN 111628914 A (XI'AN MICROELECTRONICS TECHNOLOGY INSTITUTE) 04 September 2020 (2020-09-04) entire document | 1-10 |
| A | US 2015092678 A1 (MOTOROLA MOBILITY LLC) 02 April 2015 (2015-04-02) entire document | 1-10 |
| A | US 2021306910 A1 (MITSUBISHI ELECTRIC RESEARCH LABORATORIES, INC.) 30 September 2021 (2021-09-30) entire document | 1-10 |
| A | US 2022182330 A1 (HUAWEI TECHNOLOGIES CO., LTD.) 09 June 2022 (2022-06-09) entire document | 1-10 |
| A | WO 2018177256 A1 (ZTE CORP.) 04 October 2018 (2018-10-04) entire document | 1-10 |

☑ Further documents are listed in the continuation of Box C.  ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
|---|---|
| **13 July 2023** | **21 July 2023** |

| Name and mailing address of the ISA/CN | Authorized officer |
|---|---|
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**

| International application No. |
| --- |
| **PCT/CN2023/093321** |

**C.    DOCUMENTS CONSIDERED TO BE RELEVANT**

| Category* | Citation of document, with indication, where appropriate, of the relevant passages | Relevant to claim No. |
| --- | --- | --- |
| A | WO 2022037664 A1 (VIVO MOBILE COMMUNICATION CO., LTD.) 24 February 2022 (2022-02-24)<br>entire document | 1-10 |
| A | WO 2022121680 A1 (SPREADTRUM SEMICONDUCTOR (NANJING) CO., LTD.) 16 June 2022 (2022-06-16)<br>entire document | 1-10 |

Form PCT/ISA/210 (second sheet) (July 2022)

## INTERNATIONAL SEARCH REPORT
### Information on patent family members

International application No.

**PCT/CN2023/093321**

| Patent document cited in search report | | | Publication date (day/month/year) | Patent family member(s) | | | Publication date (day/month/year) |
|---|---|---|---|---|---|---|---|
| CN | 111628914 | A | 04 September 2020 | None | | | |
| US | 2015092678 | A1 | 02 April 2015 | WO | 2015023633 | A1 | 19 February 2015 |
| | | | | EP | 3033893 | A1 | 22 June 2016 |
| | | | | EP | 3509334 | A1 | 10 July 2019 |
| | | | | CN | 105453616 | A | 30 March 2016 |
| US | 2021306910 | A1 | 30 September 2021 | JP | 2023517143 | A | 21 April 2023 |
| | | | | EP | 3942862 | A1 | 26 January 2022 |
| | | | | WO | 2021192603 | A1 | 30 September 2021 |
| | | | | CN | 115336320 | A | 11 November 2022 |
| US | 2022182330 | A1 | 09 June 2022 | WO | 2021036915 | A1 | 04 March 2021 |
| | | | | EP | 4016942 | A1 | 22 June 2022 |
| | | | | CN | 112448896 | A | 05 March 2021 |
| WO | 2018177256 | A1 | 04 October 2018 | CN | 108667751 | A | 16 October 2018 |
| WO | 2022037664 | A1 | 24 February 2022 | EP | 4203603 | A1 | 28 June 2023 |
| | | | | US | 2023199906 | A1 | 22 June 2023 |
| | | | | CN | 114080067 | A | 22 February 2022 |
| WO | 2022121680 | A1 | 16 June 2022 | CN | 114614876 | A | 10 June 2022 |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202211289349